# EUROPEAN PATENT SPECIFICATION

(11) **EP 3 149 305 B1**
(45) Date of publication and mention of the grant of the patent: **30.05.2018**
(21) Application number: 15729312.7
(22) Date of filing: 02.06.2015
(51) Int. Cl.: F01P 11/12, A01D 41/12

(54) **SUCTION WAND FOR A COOLER BOX**
SAUGARM FÜR EINEN KÜHLERKASTEN
TUBE D'ASPIRATION POUR UNE BOÎTE DE REFROIDISSEUR

(30) Priority: 02.06.2014 US 201462006468 P
(43) Date of publication of application: 05.04.2017
(73) Proprietor: CNH Industrial Belgium N.V., 8210 Zedelgem (BE)
(72) Inventor: DAVENPORT, Raymond Samuel Trey, Gainesville, GA 30501 (US); IVEY, Cameron Jackson, Denver, PA 17517 (US); PASCHAL, David, Lititz, PA 17543 (US); TAMAMIDIS, Panos, Mount Prospect, IL 60056 (US); GYENES, Matthew John, Ephrata, PA 17522 (US); MERKEL, Mark, Barto, PA 19504 (US); SARPOTDAR, Shekhar, Rockville, MD 20850 (US)
(74) Representative: CNH Industrial IP Department
(86) International application number: PCT/US2015/033762
(87) International publication number: WO 2015/191334

(56) References cited:
- EP-A1- 0 079 399
- US-A- 2 601 704
- US-A- 5 466 271
- US-A1- 2009 211 208

## Description

### BACKGROUND

The subject application relates in general to agricultural harvesters and in particular to an apparatus for effectively cleaning the screen of an engine cooler box of the harvester so that the cooler box can effectively operate cool during operations.

The engine of an agricultural harvester such as a combine is often located at the top rear of the combine chassis with a cooler box mounted adjacent the engine. An engine fan draws cooling air into cooler box cores/heat exchangers mounted in the cooler box through a screen that is intended to prevent crop debris from coating and plugging the cooler cores/heat exchangers. The cooler cores are stacked behind the screen in such a way that the upper and lower cores rely on cleaning of the radially outer portions of the screen in order to receive cooling air flow. The middle core is able to use the central or inner region of the screen for air flow.

Conventional rotating suction wands provide effective cleaning of the inner or central regions of the screen. However, cleaning of the inner or central air screen region in typical cooler boxes only provide effective air flow to the middle core, and each core is designed to cool a unique system of the combine (hydraulics, engine coolant, etc.). Thus, in current combine designs, certain systems of the combine may not experience optimal cooling.

US2009/0211208 A1 discloses a vacuum apparatus rotatable about an axis through a filter screen for continually removing contaminants, which utilizes an asymmetrical vacuum arm supported by a center hub, and large longitudinally extending asymmetrical vacuum orifices in portions of the arm on opposite sides of the hub, operable for removing large elements of debris, trash and the like from the screen.

During harvesting crop residue is expelled from the rear of combine. Tail or side winds can blow this material back over the combine where it is drawn to the cooler box screen by the engine fan and covers the screen. As noted above, a rotating suction wand, which rotates e.g., at approximately 80 RPM, is connected to a vacuum source and is used to clean the cooler box screen of crop debris. Conventional rotating suction wands include a single slot for generating a suction force for clearing debris from the screen. This configuration, however, fails to optimize clearing of debris from the screen as the suction wand rotates and sucks debris from the screen. That is, the distal ends of the suction wand must traverse greater surface area and clear much more debris compared to the proximal ends of the suction wand located closer to a central hub of the suction wand. Thus, performance at the distal ends of the suction wand is diminished due to the relative higher speed of the distal ends of the suction wand compared to the relative lower surface speed near the center of the wand. In addition, suction or air flow tends to be greater nearest the hub of the rotating suction wand and diminishes toward the outer ends or tips of the wand thereby further compromising cleaning of the screen at the radially outermost regions thereof.

The subject application provides for an improved suction wand for clearing debris from a screen, e.g., from a screen of a cooler box of an agricultural combine. As used herein for purposes of illustration and not by way of limitation, an exemplary aspect of a suction wand in accordance with the subject application for use in clearing debris from a cooler box screen of an agricultural combine will be described. However, the suction wand of the present application is not so limited to a combine harvester and can further be employed as part of other heavy machinery employing cooling package systems e.g., forage harvesters. Moreover, the suction wand of the present application can be applied to any cooling package system having a screen from which debris is to be removed.

### SUMMARY

According to the invention a suction wand for a cooler box according to claim 1 is provided.

### BRIEF DESCRIPTION OF THE DRAWINGS

The foregoing summary, as well as the following detailed description of several aspects of the subject application, will be better understood when read in conjunction with the appended drawings. For the purpose of illustrating the subject application there are shown in the drawings several aspects, but it should be understood that the subject application is not limited to the precise arrangements and instrumentalities shown.

In the drawings:
FIG. 1 is a right side view of an agricultural harvester combine illustrating a cooler box at an upper rear region thereof in accordance with the invention;
FIG. 2 is an enlarged perspective view of an agricultural combine cooler box equipped with a screen about which a suction wand in accordance with the subject application rotates to remove debris from the screen;
FIG. 3A is a front anterior perspective view of a suction wand in accordance with a first embodiment of the invention;
FIG. 3B is a rear perspective view of the suction wand of FIG. 3A;
FIG. 3C is a rear plan view of the suction wand of FIG. 3A;
FIG. 3D is a coronal cross-sectional front anterior perspective view of the suction wand of FIG. 3A;
FIG. 3E is a sagittal cross-sectional view of the suction wand of FIG. 3A;
FIG. 3F is a transverse cross-sectional view of the suction wand of FIG. 3A;
FIG. 4A is a perspective view of a suction wand in accordance with another embodiment of the invention;
FIG. 4B is front plan view of the suction wand of FIG. 4A;
FIG. 4C is a rear plan view of the suction wand of FIG. 4A;
FIG. 4D is a transverse cross-sectional view of the suction wand of FIG. 4A;
FIG. 4E is a sagittal cross-sectional view of the suction wand of FIG. 4A;
FIG. 5A is a front anterior perspective view of a suction wand not in accordance with the invention;
FIG. 5B is a rear perspective view of the suction wand of FIG. 5A;
FIG. 5C is a coronal front cross-sectional perspective view of the suction wand of FIG. 5A;
FIG. 5D is a transverse cross-sectional view of the suction wand of FIG. 5A;
FIG. 6A is a rear plan view of a suction wand not in accordance with the invention;
FIG. 6B is a rear perspective view of the suction wand of FIG. 6A;
FIG. 6C is a front anterior perspective view of the suction wand of FIG. 6A;
FIG. 6D is a coronal front cross-sectional view of the suction wand of FIG. 6A;
FIG. 7A is a front anterior perspective view of a suction wand not in accordance with the invention;
FIG. 7B is a rear plan view of the suction wand of FIG. 7A;
FIG. 7C is a sagittal cross-sectional view of the suction wand of FIG. 7A;
FIG. 8A is a sagittal cross-sectional view of a suction wand not in accordance with the invention;
FIG. 8B is an enlarged partial view of the suction wand of FIG. 8A;
FIG. 8C is a rear perspective view of the suction wand of FIG. 8A;
FIG. 8D is a front perspective view of the suction wand of FIG. 8A; and
FIG. 8E is a transverse cross-sectional view of the suction wand of FIG. 8A.

### DETAILED DESCRIPTION

Reference will now be made in detail to the various aspects of the subject application illustrated in the accompanying drawings. Wherever possible, the same or like reference numbers will be used throughout the drawings to refer to the same or like features. It should be noted that the drawings are in simplified form and are not drawn to precise scale. In reference to the disclosure herein, for purposes of convenience and clarity only, directional terms such as top, bottom, left, right, above, below and diagonal, are used with respect to the accompanying drawings. Such directional terms used in conjunction with the following description of the drawings should not be construed to limit the scope of the subject application in any manner not explicitly set forth. Additionally, the term "a," as used in the specification, means "at least one." The terminology includes the words above specifically mentioned, derivatives thereof, and words of similar import.

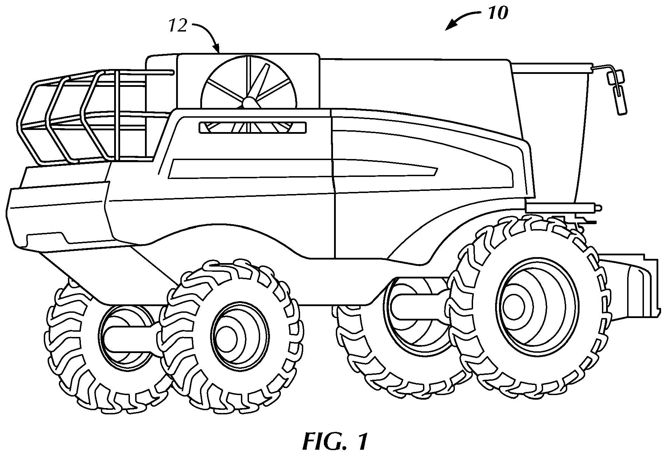

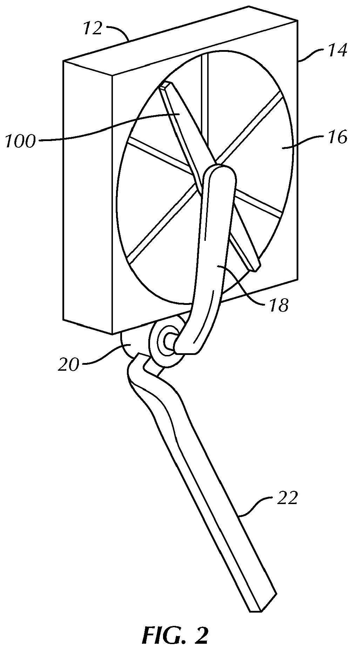

FIG. 1 illustrates an agricultural harvester 10 such as a combine or the like applicable to the subject application. Located at the upper rear of the combine is an engine which is hidden from view by a cooler box 12. As shown in FIG. 2, cooler box 12 includes a cooler box door 14 which substantially encases a circular screen 16 in which a flow of air passes through for communication with the internals of the cooler box. The cooler box 12 houses among other things a radiator of the combine.

FIG. 2 illustrates a suction wand 100 having a longitudinal rear face facingly engaging the circular screen 16. The suction wand is mounted adjacent the circular screen so as to rotate about an axis such that rotation of the tips of the suction wand forms a circle substantially matching the size of the circular screen 16 or slightly overlaying the circular screen. Extending from the suction wand 100 is a suction hose 18 operatively connected to a fan housing 20 and thereafter a discharge 22. The structure, function and operation of the cooler box, circular screen, suction hose and fan housing are known in the art and a detailed description of such components is not necessary for a complete understanding of the present aspects of the subject application. However, a typical cooler box and related components applicable to the subject application are disclosed in U.S. Patent No. 8,197,567.

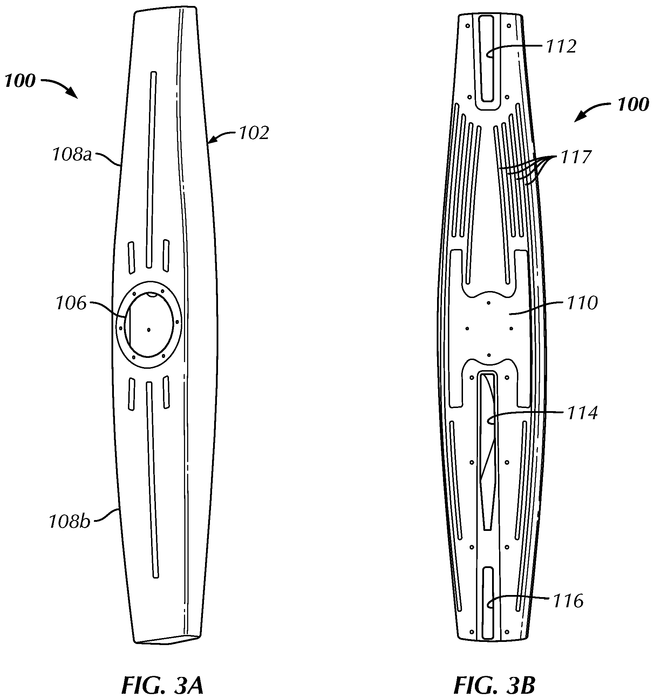

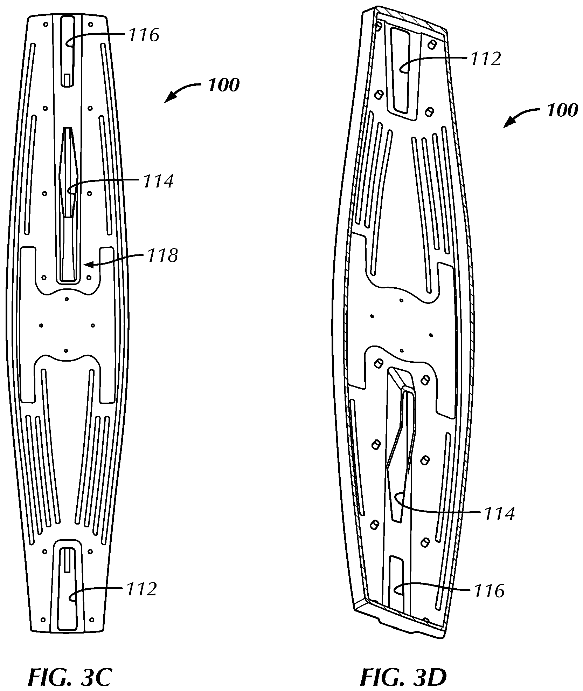

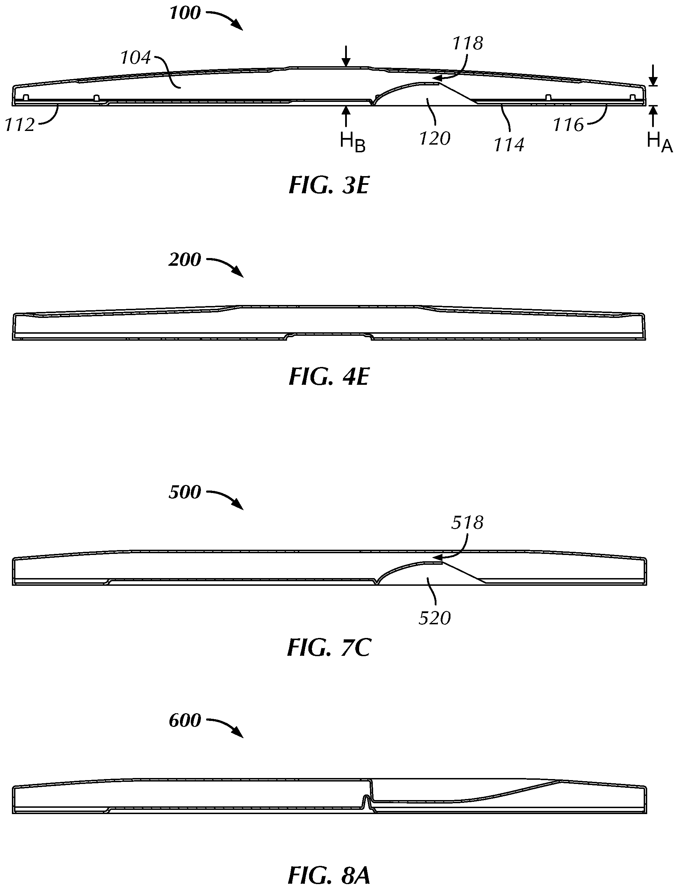

In accordance with a first aspect, the subject application provides a suction wand 100 as shown and configured in FIGS. 3A-3F. The suction wand 100 is an elongated wand having a hollow body 102 forming an elongated interior chamber 104 (FIG. 3E) that is in fluid communication with the suction hose 18 for generating a negative pressure within the hollow body. The suction wand 100 also includes a hub 106 for attaching to a rotary device such that the suction wand rotates about the hub or with the rotary device. The hub is located about a center of the elongated hollow body portion for connecting to the suction hose 18.

In other words, the suction wand includes a pair of arms extending from the hub, i.e., a first arm or first end 108a and a second arm or second end 108b (FIG. 3A). However, the suction wand can alternatively be configured to be symmetric, asymmetric, or with more than two arms such as multiple arms extending from the hub 106.

The shape of the hollow body 102 can be that of a rectangular prism but is preferably configured with the distal ends of the hollow body tapered inwardly. The rear face 110 (FIG. 3B) of the suction wand is configured with three slot openings or, simply, slots 112, 114 and 116 each in fluid communication with the interior of the hollow body 102 for allowing suction to be generated at the openings of each slot 112, 114 and 116. The first slot 112 is positioned about the first end of the suction wand and extends a length about ¼ to 1/3 the longitudinal length of the suction wand. The second slot 114 extends from about the hub 106 a length about 1/3 of the longitudinal length of the suction wand. The third slot 116 is positioned about a second end of the suction wand opposite the first end and extends a length about ¼ to 1/3 the longitudinal length of the suction wand.

Each of the first, second and third slots 112, 114 and 116 have a width that is smaller than an overall width of the suction wand hollow body 102. For example, the ratio of the width of any slot to the overall width of the hollow body can be 1/6, 1/5, ¼, 1/3 or some other fraction. In addition, as shown in FIG. 3B, at least the rear face 110 of suction wand 100 includes a plurality of stiffening ribs formed therein in order to minimize flexure of the suction wand during rotation.

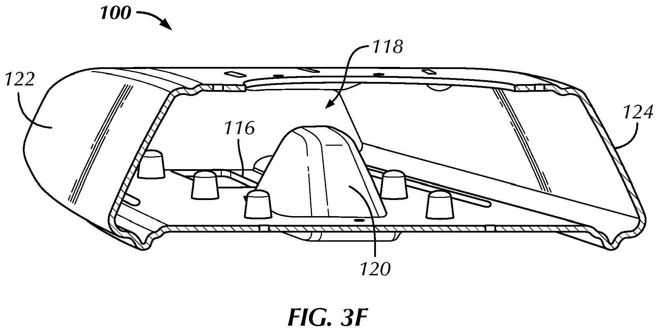

As shown in FIGS. 3E and 3F, the suction wand is configured with a throat region 118 about the second slot 114 so as to retard the flow of fluid communication within the interior of the hollow body between the hub and the third slot such that greater amounts of suction is preserved at the distal ends i.e., at the first and third slots 112, 116, compared to the middle sections of the suction wand i.e., about the second slot 114. The throat region 118 can be formed e.g., by a concave or U-shaped riser 120 extending inwardly of the hollow body 102 from its rear face.

The throat region 118 effectively reduces the overall volume of space between the third slot 116 and the hub such that higher negative pressure about the third slot can be maintained.

The slots 112, 114 and 116 are also configured to be tapered such that the distal ends of the slots are wider than the proximal ends i.e., ends closer to the hub 106. The slots are also configured as substantially rectangular or trapezoidal slots having their faces facingly engaging the circular screen 16.

The first and third slots 112, 116 can optionally be configured to have substantially the same shape and positioned along the longitudinal length of the suction wand such that during rotation of the suction wand, the first slot 112 substantially covers the same area across the screen as the third slot 116 thereby providing double coverage of the same screen area. That is, the first slot opening 112 is spaced from the third slot opening 116 such that upon rotation of the suction wand the first slot opening defines a circular path that overlaps with a circular path defined by the third slot opening.

The hollow body of the suction wand 100 extends further than the distal ends of the first and second slots 112, 116. In other words, the first and second slots 112, 116 are spaced slightly from the most distal ends of the suction wand which advantageously increases suction emanating from the ends of the first and second slots.

Referring to FIG. 3E, the height H_{A} at the tips of the suction wand 100 is also preferably configured to be as large as possible relative to that of height H_{B} at the center of the suction wand. That is, the reduction in height H_{A} relative to H_{B} is minimized to preserve suction performance at the ends of the suction wand. However, H_{A} can be 30%, 40%, 50%, 60%, 70%, 80%, 90% or some other percentage of the height of H_{B}.

Moreover, referring to FIG. 3F, owing to the structure of the riser 120, suction power is better distributed to the ends of the suction wand. That is, suction within a conventional wand is greatest closer to the hub than at its tips. Thus, to preserve suction power at the tips of the suction wand 100 relative to suction adjacent the hub, the riser 120 causes suction power or flow to be divided along the riser thereby resulting in lower suction at the second slot 114 and increasing suction at the third slot 116. In other words, the volume of space occupied by the riser facilitates the redistribution of flow and pressure along the suction wand.

As shown in FIG. 3F, the lateral sides 122, 124 of the suction wand are also configured to taper inwardly extending from its posterior surface towards its anterior surface.

Referring back to FIG. 3C the length of the second slot 114 extends a fixed distance so as to form an underlap with third slot 116 i.e., the second slot is spaced from the third slot. That is, the circular path defined by the second slot 114 is spaced from the circular path defined by the third slot 116 during rotation of the wand thereby advantageously preserving suction power across the suction wand. This underlap is also advantageous because suction forces extend slightly beyond the edges of the slots thereby negating the need for overlapping circular pathways and preserving suction power within the suction wand to fully cover the diameter of the screen despite the gap between the circular paths traversed by the second and third slots.

FIG. 3C further shows that the outer shape of the wand 100 can be asymmetrical. That is, the first end of the wand in which the first slot 112 resides is slightly narrower in width than the second end of the wand in which the second and third slots 114, 116 reside. The purpose of this asymmetry is to provide greater negative air flow to the arm of the wand that contains multiple or more slots e.g., the second and third slots in order to compensate for the greater slot opening space created by the second and third slots. That is, air flow is biased toward the second and third slots in order to maintain sufficient suction through all slots of the suction wand.

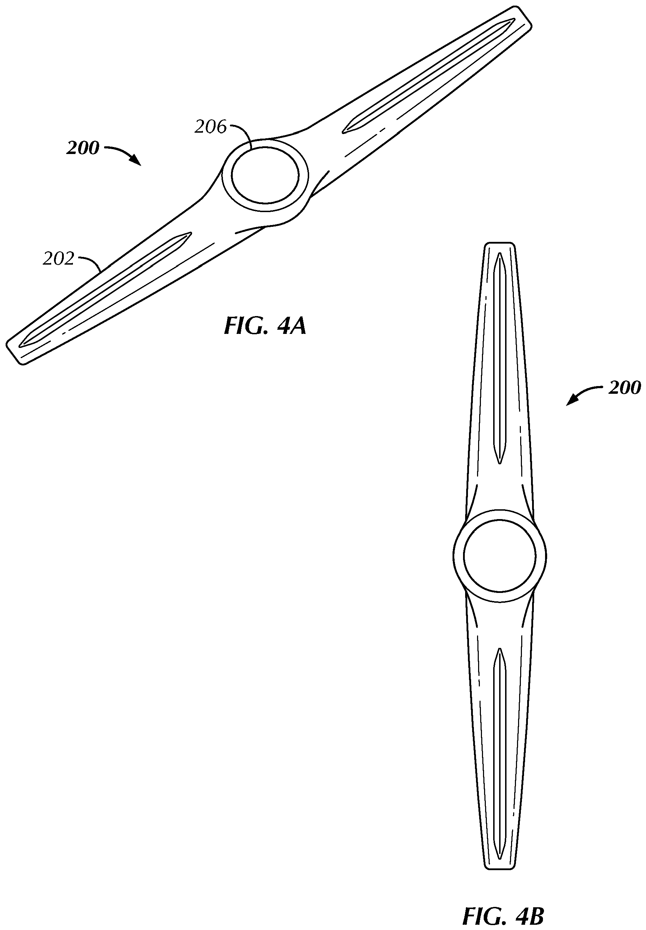

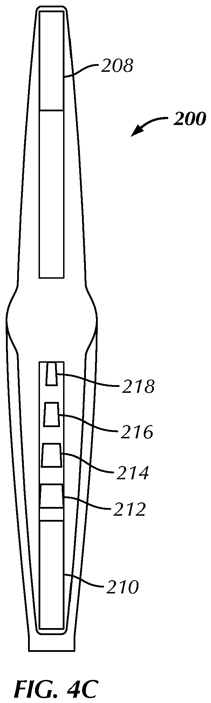

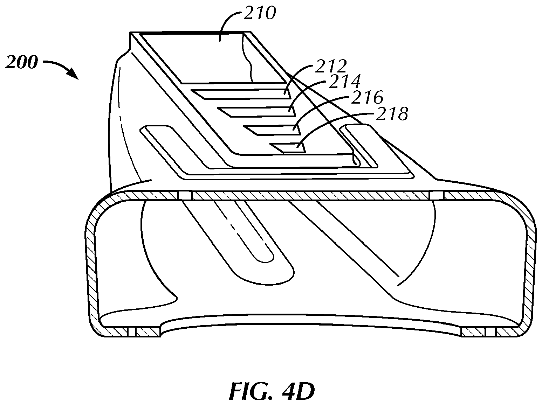

FIGS. 4A-4E illustrate a suction wand 200 in accordance with another embodiment of the invention. Suction wand 200 is similarly constructed as suction wand 100 but with the following differences. The suction wand 200 has an overall shape configured as shown in FIGS. 4A through 4C. As illustrated in FIGS. 4C and 4D, the suction wand 200 includes first 208, second 210, third 212, fourth 214, fifth 216 and sixth 218 slots each in fluid communication with an interior of a hollow body 202 for facingly engaging the screen of the cooler box. Each of the second through sixth slots 210, 212, 214, 216 and 218 are separated by a partition member of the hollow body. First slot 208 extends from adjacent or slightly spaced from a tip of the suction wand about a first end thereof a longitudinal length about ¼ to 1/3 of the overall suction wand longitudinal length. The second slot 210 extends from adjacent or slightly spaced from a tip of the suction wand at a second end opposite the first end a longitudinal length about ¼ to 1/3 of the suction wand. Each of the third through sixth slots 212, 214, 216 and 218 are positioned between the second slot 210 and a hub 206 about the second end of the elongated body of the suction wand. Each of the third through sixth slots 212, 214, 216 and 218 are also configured to have an opening progressively smaller in size than the preceding slot.

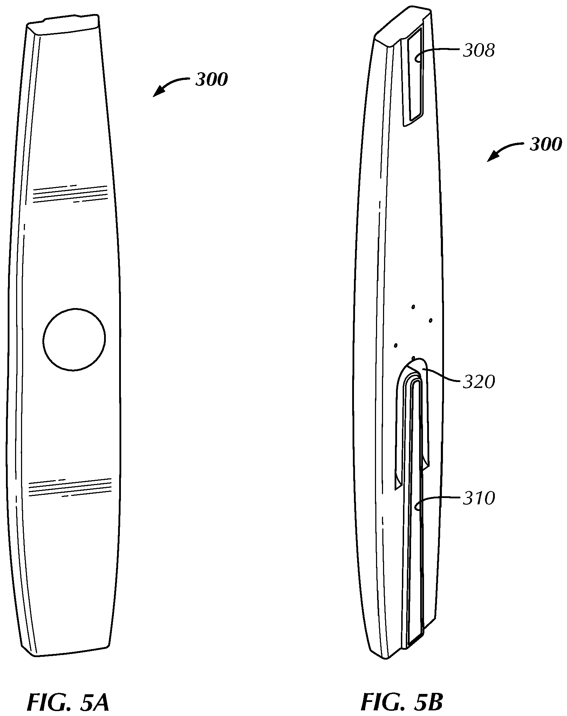

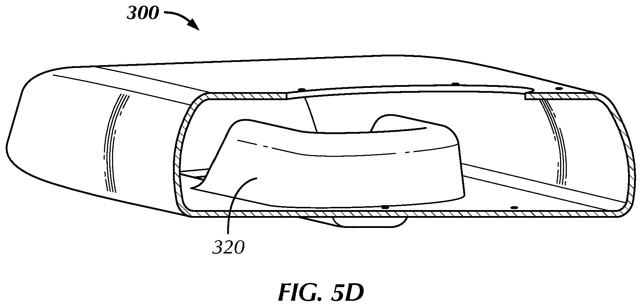

FIGS. 5A-5D illustrate a suction wand 300 not in accordance with the invention. Suction wand 300 is similarly constructed as suction wand 100 but with the following differences. Suction wand 300 includes a first slot 308 and a second slot 310. The first slot 308 extends from adjacent or slightly spaced from a tip of the suction wand at a first end a longitudinal length about ¼ to 1/3 of the overall suction wand longitudinal length. The second slot 310 extends from adjacent or slightly spaced from a tip of the suction wand at a second end opposite the first end and extends a longitudinal length of the suction wand from the tip of the second end to immediately adjacent the hub 306.

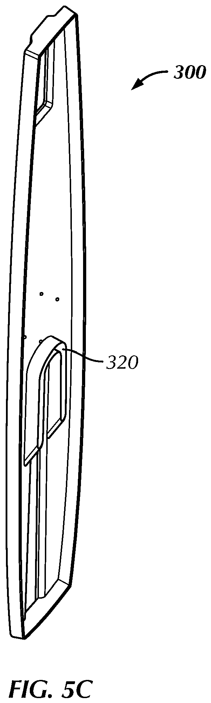

Referring to FIGS. 5B-5D, the second slot 310 is also configured with a partial wall portion or riser 320 that circumscribes the second slot 310 and extends inwardly of the hollow body 302, but only partially circumscribing a circumference of the second slot, as best shown in FIG. 5C. The wall portion or riser 320 functions similarly to the aforementioned riser 120. That is, partial wall or riser 320 retards the flow of fluid communication within the interior of the hollow body nearest the hub such that greater amounts of suction is preserved at the distal ends of the slots compared to the middle sections of the suction wand i.e., about the central portion of the second slot 310. The partial wall 320 is also referred to as a U-shaped riser wherein both legs of the U extend substantially the same length. The partial wall is positioned about a proximal end of the second slot 310 e.g., between the slot and the hub.

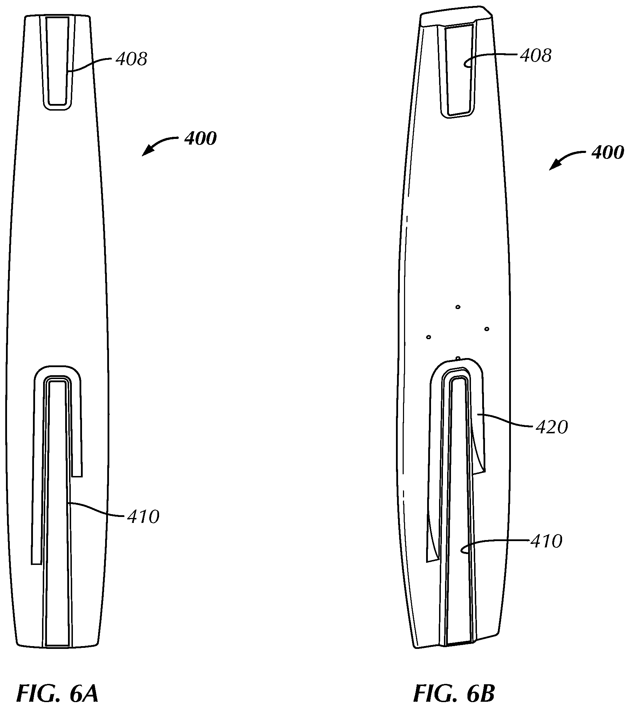

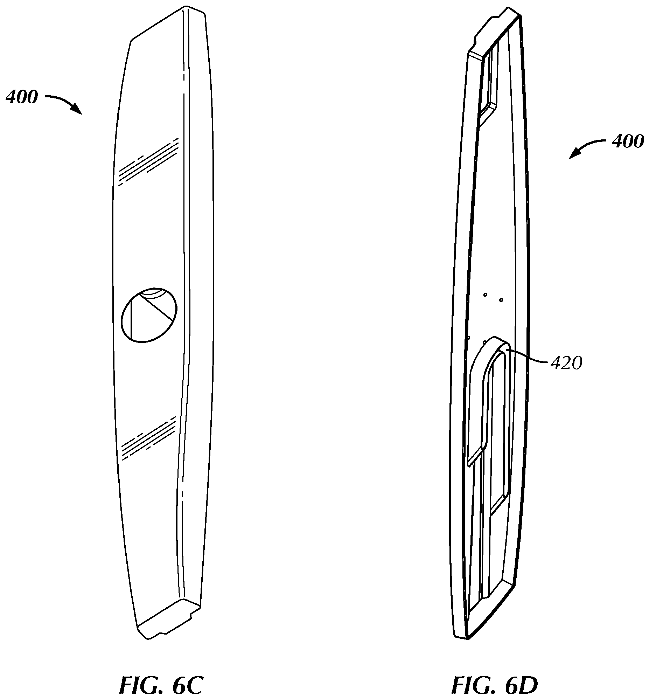

FIGS. 6A-6D illustrate a suction wand 400 not in accordance with the invention. Suction wand 400 is similarly constructed as suction wand 100 but with the following differences. The suction wand 400 has an overall shape configured as best shown in FIG. 6B. Suction wand 400 includes a first slot 408 and a second slot 410. The first slot 408 extends from adjacent or slightly spaced from a tip of the suction wand at a first end a longitudinal length about ¼ to 1/3 of the overall suction wand longitudinal length. The second slot 410 extends from adjacent or slightly spaced from a tip of the suction wand at a second end opposite the first end and extends a longitudinal length of the suction wand from the tip of the second end to immediately adjacent the hub 406.

FIGS. 6B and 6D illustrate that the second slot 410 is also configured with a partial wall or riser 420 that circumscribes the second slot 410 and extends inwardly of the hollow body 402, but only partially along the circumference of the second slot, as best shown in FIG. 6B. The partial wall 420 is also referred to as a U-shaped riser and is configured substantially the same as the U-shaped riser 320 except that one leg of the U-shaped riser extends further or is longer than the other. That is, the wall portion circumscribes a most proximal end of the second slot opening 410 and extends along a first lateral side of the second slot opening further distally than along a second lateral side of the second slot opening opposite the first lateral side. The partial wall is also positioned between the hub and the second slot.

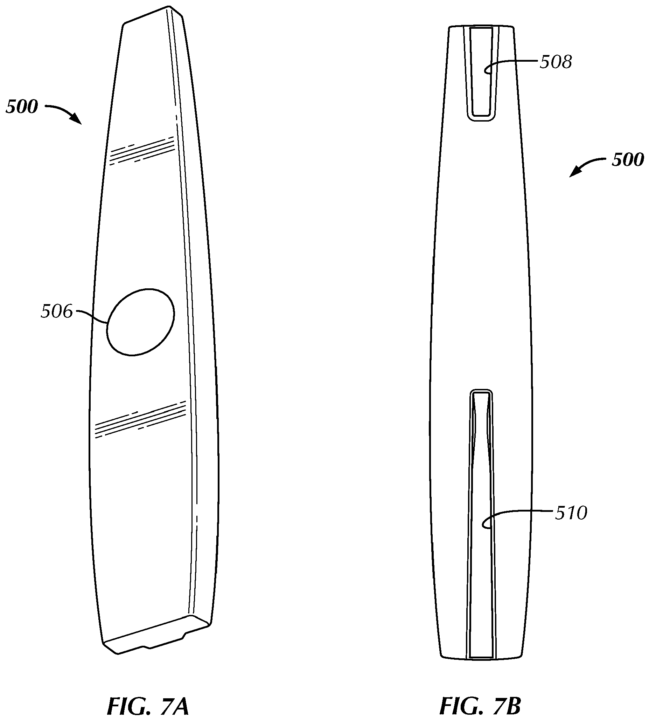

FIGS. 7A-7C illustrate a suction wand 500 not in accordance with the invention. Suction wand 500 is similarly constructed as suction wand 100 but with the following differences. The suction wand 500 has an overall shape configured as best shown in FIG. 7B. Suction wand 500 includes a first slot 508 and a second slot 510. The first slot 508 extends from adjacent or slightly spaced from a tip of the suction wand at a first end a longitudinal length about ¼ to 1/3 of the overall suction wand longitudinal length. The second slot 510 extends from adjacent or slightly spaced from a tip of the suction wand at a second end opposite the first end and extends a longitudinal length of the suction wand from the tip of the second end to immediately adjacent the hub 506.

The second slot 510 of suction wand 500 also includes a riser or bump 520 that extends inwardly from the posterior surface (or facingly engaging surface) of the suction wand, as best shown in FIG. 7C, forming a throat region 518. That is, the throat region 518 is formed from the posterior wall or surface extending inwardly of the hollow body so as to be adjacent the anterior wall at least partially the longitudinal length of the second slot, thereby forming a region of restricted air flow from a tip of the suction wand to the hub region 506 of the suction wand.

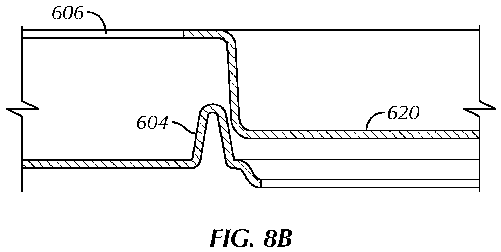

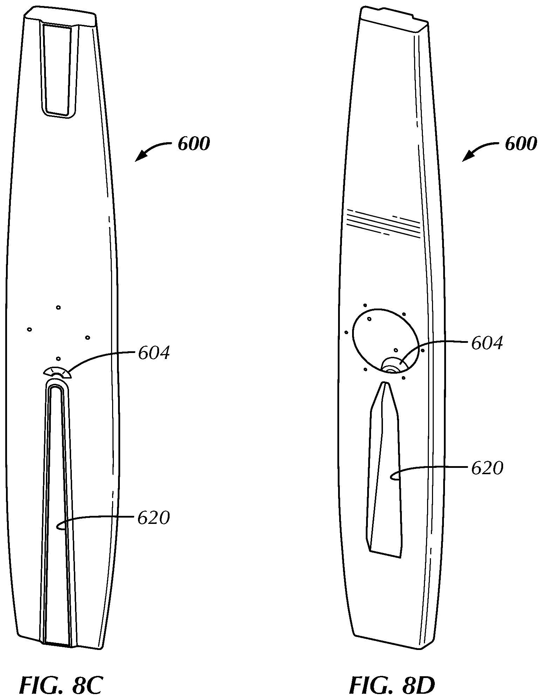

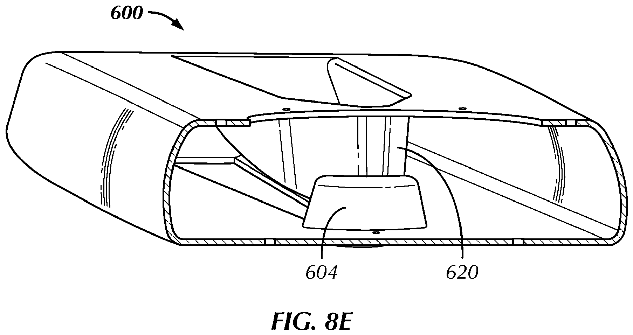

FIGS. 8A-8E illustrate a suction wand 600 not in accordance with the invention. Suction wand 600 is similarly constructed as suction wand 500 but with the following differences. The suction wand 600 additionally includes a flow retarder 604 (FIGS. 8B-8E) extending inwardly of the hollow body 602 from a posterior surface of the suction wand. As illustrated in FIGS. 8C, 8D and 8E, the flow retarder 604 is an inwardly extending C-shaped wall segment positioned adjacent a proximal end of a wall portion or riser 620 extending inwardly of an anterior surface of the suction wand. Suction wand 600 has a hub 606 located about a center of the elongated hollow body portion for connecting to suction hose 18 (FIG. 2) wherein the flow retarder is between the hub and the wall portion 620. The flow retarder and riser collectively form an increasingly restricted flow region for the flow of air from a distal end of the suction wand toward the hub of the suction wand. That is, suction is redistributed across the length of the wand 600 whereby it is greatest at distal ends of the wand and decreases radially inwardly in order to substantially uniformly remove debris from the entire surface of the circular screen 16 (FIG. 2).

## Claims

1. A suction wand (100,200) for a cooler box (12) comprising:
an elongated hollow body (102,202) for attaching to a suction hose (18); and
a first slot (112,208) opening, a second slot (114,210) opening, **characterized in that** said suction wand (100,200) further comprising a third slot (116) opening, each of said slot openings in fluid communication with an interior of the hollow body (102,202) for facingly engaging a screen (16) of the cooler box (12).

2. The suction wand (100,200) of claim 1, further comprising a hub about a center of the elongated hollow body (102,202) portion for connecting to the suction hose (18).

3. The suction wand (100,200) of claim 1, wherein the first, second and third slot (116) openings are tapered.

4. The suction wand (100,200) of claim 1, further comprises a throat region between the second slot (114,210) opening and the third slot (116) opening.

5. The suction wand (100,200) of claim 1, wherein the first slot (112,208) opening is spaced from the third slot (116) opening such that upon rotation of the suction wand (100,200) the first slot (112,208) opening defines a circular path that overlaps with a circular path defined by the third slot (116) opening.

6. The suction wand (100,200) of claim 1, wherein the second slot (114,210,310,410,510) opening is spaced from the third slot (116) opening such that upon rotation of the suction wand (100,200), the third slot (116) opening defines a circular path that underlaps a circular path defined by the second slot (114,210) opening.

7. The suction wand (100,200) of claim 1, wherein the elongated hollow body (102,202) is asymmetric.

8. The suction wand (100,200) of claim 7, wherein the elongated hollow body (102,202) has a first end having a first width and a second end opposite the first end having a second width larger than the first width to bias air flow towards the second end.

9. The suction wand (100,200) of claim 8, wherein the first slot (112,208) opening is positioned about the first end and the second and third slot (116) openings are positioned about the second end.

10. The suction wand (100,200) of claim 1, further comprising a fourth slot opening, a fifth slot opening, and sixth slot opening each in fluid communication with the interior of the hollow body (102,202) for facingly engaging the screen (16) of the cooler box (12).

11. The suction wand (100,200) of claim 10, wherein the elongated hollow body (102,202) has a first end and a second end opposite the first end, and wherein the first slot (112,208) opening is positioned about the first end and the second, third, fourth, fifth and sixth slot openings are each positioned about the second end.

12. The suction wand (100,200) of claim 10, wherein the second, third, fourth, fifth and sixth slot openings are sized to be progressively smaller.

13. The suction wand (100,200) of claim 1, further comprising a wall portion extending inwardly of the elongated hollow body (102,202) and partially circumscribing a circumference of the second slot (114,210) opening.

14. The suction wand (100,200) of claim 13, wherein the wall portion circumscribes a most proximal end of the second slot (114,210) opening and extends along a first lateral side of the second slot (114,210) opening further distally than along a second lateral side of the second slot (114,210) opening opposite the first lateral side.

15. The suction wand (100,200) of claim 13, further comprising a flow retarder extending inwardly of the elongated hollow body (102,202) from a posterior wall surface adjacent the wall portion.

## Patentansprüche

1. Saugarm (100, 200) für ein Kühlergehäuse (12) mit:
einem länglichen Hohlkörper (102, 202) zur Befestigung an einem Saugschlauch (18); und
einer ersten Schlitzöffnung (112, 208), einer zweiten Schlitzöffnung (114, 210),
**dadurch gekennzeichnet, dass**
der Saugarm (100, 200) des Weiteren eine dritte Schlitzöffnung (116) aufweist, wobei jede der Schlitzöffnungen in Fluidverbindung mit einem Innenraum des Hohlkörpers (102, 202) ist, um zugewandt in ein Sieb (16) des Kühlergehäuses (12) einzugreifen.

2. Saugarm (100, 200) nach Anspruch 1, der des Weiteren eine Nabe um einen Mittelpunkt des länglichen Hohlkörperabschnitts (102, 202) zur Verbindung mit dem Saugschlauch (18) aufweist.

3. Saugarm (100, 200) nach Anspruch 1, wobei die ersten, zweiten und dritten Schlitzöffnungen (116) verjüngt sind.

4. Saugarm (100, 200) nach Anspruch 1, der des Weiteren einen Verengungsbereich zwischen der zweiten Schlitzöffnung (114, 210) und der dritten Schlitzöffnung (116) aufweist.

5. Saugarm (100, 200) nach Anspruch 1, wobei die erste Schlitzöffnung (112, 208) von der dritten Schlitzöffnung (116) derart beabstandet ist, dass bei Drehung des Saugarms (100, 200) die erste Schlitzöffnung (112, 208) eine Kreisbahn definiert, die mit einer Kreisbahn überlappt, die durch die dritte Schlitzöffnung (116) definiert ist.

6. Saugarm (100, 200) nach Anspruch 1, wobei die zweite Schlitzöffnung (114, 210, 310, 410, 510) von der dritten Schlitzöffnung (116) derart beabstandet ist, dass bei Drehung des Saugarms (100, 200) die dritte Schlitzöffnung (116) eine Kreisbahn definiert, die zu einer durch die zweite Schlitzöffnung (114, 210) definierten Kreisbahn eine Lücke aufweist bzw. diese unterlappt.

7. Saugarm (100, 200) nach Anspruch 1, wobei der längliche Hohlkörper (102, 202) asymmetrisch ist.

8. Saugarm (100, 200) nach Anspruch 7, wobei der längliche Hohlkörper (102, 202) ein erstes Ende mit einer ersten Breite und zweites, dem ersten Ende gegenüberliegendes Ende mit einer zweiten Breite, die größer als die erste Breite ist, aufweist, um den Luftstrom zu dem zweiten Ende hin zu beeinflussen.

9. Saugarm (100, 200) nach Anspruch 8, wobei die erste Schlitzöffnung (112, 208) um das erste Ende herum und die zweiten und dritten Schlitzöffnungen (116) um das zweite Ende herum angeordnet sind.

10. Saugarm (100, 200) nach Anspruch 1, der des Weiteren eine vierte Schlitzöffnung, eine fünfte Schlitzöffnung und eine sechste Schlitzöffnung aufweist, die jeweils in Fluidverbindung mit dem Inneren des Hohlkörpers (102, 202) sind, um zugewandt in das Sieb (16) des Kühlergehäuses (12) einzugreifen.

11. Saugarm (100, 200) nach Anspruch 10, wobei der längliche Hohlkörper (102, 202) ein erstes Ende und ein dem ersten Ende gegenüberliegendes zweites Ende aufweist, und wobei die erste Schlitzöffnung (112, 208) um das erste Ende angeordnet ist und die zweiten, dritten, vierten, fünften und sechsten Schlitzöffnungen jeweils um das zweite Ende angeordnet sind.

12. Saugarm (100, 200) nach Anspruch 10, wobei die zweiten, dritten, vierten, fünften und sechsten Schlitzöffnungen in ihrer Größe derart bemessen sind, dass sie fortschreitend kleiner werden.

13. Saugarm (100, 200) nach Anspruch 1, der des Weiteren einen Wandabschnitt aufweist, der sich von dem länglichen Hohlkörper (102, 202) einwärts erstreckt und einen Umfang der zweiten Schlitzöffnung (114, 210) teilweise umschreibt.

14. Saugarm (100, 200) nach Anspruch 13, wobei der Wandabschnitt ein nächstes Ende der zweiten Schlitzöffnung (114, 210) umschreibt und sich entlang einer ersten Seite der zweiten Schlitzöffnung (114, 210) weiter entfernt erstreckt als entlang einer zweiten Seite der zweiten Schlitzöffnung (114, 210), die gegenüber der ersten Seite liegt.

15. Saugarm (100, 200) nach Anspruch 13, die des Weiteren eine Stromverzögerungseinrichtung aufweist, die sich von einer hinteren Wandfläche angrenzend an den Wandabschnitt einwärts des länglichen Hohlkörpers (102, 202) erstreckt.

## Revendications

1. Tube d'aspiration (100, 200) pour un boîtier de refroidisseur (12) comprenant :
un corps creux allongé (102, 202) destiné à être attaché à un tuyau flexible d'aspiration (18), et
une première ouverture en forme de fente (112, 208), une seconde ouverture en forme de fente (114, 210),
**caractérisé en ce que** ledit tube d'aspiration (100, 200) comprend en outre une troisième ouverture en forme de fente (116), chacune des dites ouvertures en forme de fente étant en communication de fluide avec l'intérieur du corps creux (102, 202) de façon à venir en prise en vis-à-vis avec un tamis (16) du boîtier de refroidisseur (12).

2. Tube d'aspiration (100, 200) selon la revendication 1, comprenant en plus un moyeu autour du centre du corps creux allongé (102, 202) destiné à se connecter au tuyau flexible d'aspiration (18).

3. Tube d'aspiration (100, 200) selon la revendication 1, dans lequel les première, seconde et troisième (116) ouvertures en forme de fente sont effilées.

4. Tube d'aspiration (100, 200) selon la revendication 1, comprenant en plus une région de volute d'entrée entre la seconde ouverture en forme de fente (114, 210) et la troisième ouverture en forme de fente (116).

5. Tube d'aspiration (100, 200) selon la revendication 1, dans lequel la première ouverture en forme de fente (112, 208) est espacée de la troisième ouverture en forme de fente (116) de telle sorte que lors de la rotation du tube d'aspiration (100, 200), la première ouverture en forme de fente (112, 208) définit un trajet circulaire qui chevauche un trajet circulaire défini par la troisième ouverture en forme de fente (116).

6. Tube d'aspiration (100, 200) selon la revendication 1, dans lequel la seconde ouverture en forme de fente (114, 210, 310, 410, 510) est espacée de la troisième ouverture en forme de fente (116) de telle sorte que lors de la rotation du tube d'aspiration (100, 200), la troisième ouverture en forme de fente (116) définit un trajet circulaire qui chevauche le côté inférieur d'un trajet circulaire défini par la seconde ouverture en forme de fente (114, 210).

7. Tube d'aspiration (100, 200) selon la revendication 1, dans lequel le corps creux allongé (102, 202) est asymétrique.

8. Tube d'aspiration (100, 200) selon la revendication 7, dans lequel le corps creux allongé (102, 202) comporte une première extrémité ayant une première largeur et une seconde extrémité opposée à la première extrémité ayant une seconde largeur supérieure à la première largeur pour solliciter un flux d'air vers la seconde extrémité.

9. Tube d'aspiration (100, 200) selon la revendication 8, dans lequel la première ouverture en forme de fente (112, 208) est positionnée autour de la première extrémité et les seconde et troisième (116) ouvertures sont positionnées autour de la seconde extrémité.

10. Tube d'aspiration (100, 200) selon la revendication 1, comprenant en plus une quatrième ouverture en forme de fente, une cinquième ouverture en forme de fente, et une sixième ouverture en forme de fente étant chacune en communication de fluide avec l'intérieur du corps creux (102, 202) pour venir en prise en vis-à-vis avec le tamis (16) du boîtier de refroidisseur (12).

11. Tube d'aspiration (100, 200) selon la revendication 10, dans lequel le corps creux allongé (102, 202) comprend une première extrémité et une seconde extrémité opposée à la première extrémité, et la première ouverture en forme de fente (112, 208) est positionnée autour de la première extrémité et les seconde, troisième, quatrième, cinquième et sixième ouvertures en forme de fente sont positionnées chacune autour de la seconde extrémité.

12. Tube d'aspiration (100, 200) selon la revendication 10, dans lequel la seconde, troisième, quatrième, cinquième et sixième ouverture en forme de fente sont dimensionnées pour être progressivement réduites.

13. Tube d'aspiration (100, 200) selon la revendication 1, comprenant en plus une partie de cloison s'étendant à l'intérieur du corps creux allongé (102, 202) et circonscrivant en partie la circonférence de la seconde ouverture en forme de fente (114, 210).

14. Tube d'aspiration (100, 200) selon la revendication 13, dans lequel la partie de cloison circonscrit l'extrémité la plus proximale de la seconde ouverture en forme de fente (114, 210) et s'étend le long d'un premier côté latéral de la seconde ouverture en forme de fente (114, 210) de manière plus distale que le long d'un second côté latéral de la seconde ouverture en forme de fente (114, 210) opposé au premier côté latéral.

15. Tube d'aspiration (100, 200) selon la revendication 13, comprenant en plus un ralentisseur de débit s'étendant à l'intérieur du corps creux allongé (102, 202) à partir d'une surface de cloison postérieure adjacente à la partie de cloison.
